# EUROPÄISCHE PATENTSCHRIFT

(11) **EP 1 690 084 B1**
(45) Veröffentlichungstag und Bekanntmachung des Hinweises auf die Patenterteilung: **11.09.2013**
(21) Anmeldenummer: 04802690.0
(22) Anmeldetag: 09.11.2004
(51) Int. Cl.: G01N 29/30, B23K 26/00

(54) **Verfahren und Vorrichtung zum Prüfen eines Bauteils mittels Ultraschall, sowie Verwendung des Verfahrens und der Vorrichtung**
Method and device for testing a component by ultrasound, and use of said method and said device
Procédé et dispositif pour tester un élément structurel par ultrasons, ainsi qu'utilisation du procede et du dispositif

(30) Priorität: 02.12.2003 DE 10356223
(43) Veröffentlichungstag der Anmeldung: 16.08.2006
(73) Patentinhaber: MTU Aero Engines AG, 80995 München (DE)
(72) Erfinder: BAMBERG, Joachim, 85221 Dachau (DE); FEIST, Wolf-Dieter, 85256 Vierkirchen (DE)
(86) Internationale Anmeldenummer: PCT/DE2004/002473
(87) Internationale Veröffentlichungsnummer: WO 2005/054841

(56) Entgegenhaltungen:
- EP-A- 0 743 128
- DE-A1- 4 407 547
- DE-A1- 19 925 801
- US-A- 4 747 295
- PATENT ABSTRACTS OF JAPAN Bd. 2003, Nr. 03, 5. Mai 2003 (2003-05-05) & JP 2002 328098 A (FUJI PHOTO FILM CO LTD), 15. November 2002 (2002-11-15)
- PATENT ABSTRACTS OF JAPAN Bd. 1995, Nr. 06, 31. Juli 1995 (1995-07-31) & JP 07 076167 A (MIYACHI TECHNOS KK), 20. März 1995 (1995-03-20)
- PATENT ABSTRACTS OF JAPAN Bd. 2002, Nr. 06, 4. Juni 2002 (2002-06-04) & JP 2002 048773 A (RAILWAY TECHNICAL RES INST), 15. Februar 2002 (2002-02-15) in der Anmeldung erwähnt
- PATENT ABSTRACTS OF JAPAN Bd. 1995, Nr. 11, 26. Dezember 1995 (1995-12-26) & JP 07 229878 A (ISHIKAWAJIMA HARIMA HEAVY IND CO LTD), 29. August 1995 (1995-08-29)

## Beschreibung

Die Erfindung betrifft ein Verfahren und eine Vorrichtung zum Prüfen der Erkennbarkeit mindestens eines Fehlers in einem Bauteil mittels Ultraschall oder zur Auswertung eines Ultraschall-Signals des Fehlers.

Die zur Fertigung hochbelasteter Bauteile verwendeten metallischen Werkstoffe müssen hohen Qualitätsanforderungen genügen. Derartige Bauteile sind z. B. schnell rotierende Scheiben von Turbinen- oder Verdichterstufen einer Gasturbine, die ein Flugzeug antreibt. An diesen Scheiben sind Schaufeln befestigt. In einem solchen Werkstoff können Fehler auftreten, die insbesondere durch den Herstellungsprozess des Werkstoffs verursacht werden. Zu diesen Fehlern gehören Lunker, Poren, Einschlüsse, Wärmebehandlungsrisse und Schweißrisse. Benötigt werden Verfahren und Geräte, um derartige Fehler zu erkennen und um die Erkennbarkeit von Fehlern zu quantifizieren.

Aus "Dubbel - Taschenbuch für den Maschinenbau", 20. Auflage, Springer-Verlag, 2001, E33 und S87 ist die Verwendung von Ultraschall zur zerstörungsfreien Werkstoffprüfung bekannt.

Für eine zuverlässige und vergleichbare Prüfung eines Bauteils mit Ultraschall werden Test- und Kalibrierkörper verwendet. Nach dem Stand der Technik werden hierfür Blöcke mit Flachboden- oder Querbohrungen vorgesehen. Diese Blöcke sind meist aus demselben Werkstoff wie das herzustellende Bauteil gefertigt. Reale Fehler werden damit weder in ihrer Form und Ausdehnung noch in ihrer Reflexions- und Rückstrahlcharakteristik realitätsnah beschrieben.

In JP 2002-048773 A wird eine Vorrichtung offenbart, um eine Ultraschall-Prüfeinrichtung zu kalibrieren. Das Verfahren lässt sich für ein Prüfgerät mit einer Sonde und eines mit zwei Sonden verwenden. Mehrere Kalibrierlöcher werden in bestimmter Weise in einem geschweißten Bauteil angebracht. Der bzw. die Sonden werden in bestimmten Winkeln zueinander und zum Bauteil angebracht, und eine charakteristische Kurve für den Abstand zwischen Entfernung und Amplitude wird erzeugt.

In US 5670719 wird ein System offenbart, welches das Auflösungsvermögen medizinischer Ultraschall-Prüfgeräte ermittelt. Das System sagt vorher, welche lokalen Wunden oder Tumore im Gewebe eines Menschen das Prüfgerät erkennt. Ein Phantom-Behälter bildet das menschliche Gewebe nach. In mehreren Schichten werden Wunden und Tumore durch zerstreuende Partikel simuliert. Festgestellt wird, welche Partikel erkannt werden und welche nicht.

Das Dokument JP 2002 328098 A betrifft ein Verfahren zum Erfassen bzw. Einstellen der Empfindlichkeit bzw. des Auflösungsvermögens eines optischen Fehlerprüfsystems, wobei auf bzw. in einem lichtdurchlässigen Probekörper ein definierter, linearer Fehler mittels Laser erzeugt wird. Der Fehler auf bzw. in dem Probekörper soll einem realen Standardfehler entsprechen und wird in diagonaler Lage durch die Scaneinrichtung des Fehlerprüfsystems geführt, um das System einzustellen bzw. zu kalibrieren.

Das Dokument JP 07 076167 A behandelt die Erzeugung dekorativer Muster in einem durchsichtigen Kunstharzkörper. Mittels fokussierter Laserenergie werden Risse erzeugt, die optisch den Eindruck eingestreuter kleiner Gold- oder Silberfolienstücke vermitteln.

Das Dokument EP-A-0 743 128 betrifft ein Verfahren und eine Vorrichtung zur Kennzeichnung von transparenten Erzeugnissen. Dabei werden im Inneren der transparenten Teile mittels Laserenergie durch lokale Zerstörung des Werkstoffs Kennzeichnungssymbole generiert. Das Verfahren läuft in zwei Etappen ab, wobei in der ersten Etappe die Werkstoffbeständigkeit gegen Laserstrahlung reduziert, in der zweiten Etappe im selben Bereich der Werkstoff lokal zerstört wird. Dadurch sollen die Symbole optisch besonders kontrastreich werden.

Der Erfindung liegt die Aufgabe zugrunde, ein zuverlässiges Verfahren und eine zuverlässige Vorrichtung zum Prüfen der Erkennbarkeit und zur Auswertung der Form, Lage, Größe und Orientierung von Fehlern in einem Bauteil mittels Ultraschall bereitzustellen.

Die Aufgabe wird durch ein Verfahren nach Anspruch 1 und eine Vorrichtung nach Anspruch 8 gelöst. Vorteilhafte Ausgestaltungen sind in den Unteransprüchen angegeben.

Das Verfahren umfasst folgende Schritte:
- Eine elektronische Spezifikation mindestens eines Fehlers wird erzeugt. Die Spezifikation gibt die Lage, Form, Größe und Orientierung des Fehlers bzw. der Fehler vor. Sie umfasst ein dreidimensionales Punktemuster des Fehlers bzw. der Fehler und legt dadurch die Position jedes Punktes des Punktemusters In einem dreidimensionalen Raum fest.
- Gemäß der Spezifikation wird ein Probekörper hergestellt. Hierbei wird für jeden Punkt des Punktemusters ein Mikroriss im Probekörper an der Position dieses Punktes und somit ein Mikrorissfeld, welches den Fehler darstellt, erzeugt.
- Ultraschall-Signale des Probekörpers werden aufgenommen. Hierfür lässt sich jedes Ultraschall-Verfahren anwenden. Das Ultraschall-Signal wird analysiert, beispielsweise in Form von aus den Signalen erzeugten Bildern. Die Auswertung der Ultraschall-Signale umfasst mindestens die Prüfung, ob der gezielt erzeugte Fehler im Bild erkennbar ist oder nicht. Bei der Auswertung von Fehlern werden die Ultraschall-Signale den unterschiedlichen Fehlern zugeordnet, um bei realen Messungen an Bauteilen aus den Signalen auf die Form/Art des Fehlers zu schließen.

Erfindungsmäßig ist vorgesehen, dass die Mikrorisse dergestalt erzeugt werden, dass ihre größte Ausdehnung kleiner ist als die zum Aufnehmen des Ultraschall-Bildes verwendete Wellenlänge. Dadurch wird die Form eines einzelnen Mikrorisses nicht mehr diskret abgebildet. Der Fehler und dessen Reflexionsverhalten wird erst durch die Kombination der Mikrorisse, die durch die Spezifikation vorgegeben ist, erzeugt. Dadurch lässt sich die Form und die Ausdehnung des gezielt erzeugten Fehlers genau vorgeben, ohne dass die Abmessung der Mikrorisse das Verfahrensergebnis beeinflusst. Welche Fehler erkannt werden und welche nicht, hängt von der Anzahl und Verteilung der Punkte im Punktemuster ab.

Das Verfahren zeigt einen Weg auf, einen beliebigen Fehler mit geringem Aufwand vorzugeben und zu prüfen, ob dieser Fehler erkannt wird. Weiterhin zeigt das Verfahren einen Weg auf, sichtbar zu machen, wie sich Fehler in einem Ultraschall-Signal des Bauteils äußern. Eine beliebige Anzahl von Fehlern lässt sich hinsichtlich Größe, Form und Lage efach, zuverlässig und sehr realitätsnah vorgeben. Nach der Auswertung des Signals lässt sich quantitativ angeben, welche dieser Fehler erkannt werden und welche nicht. Dadurch erlaubt es das Verfahren zuverlässig anzugeben, welche realen Fehler, Gefüge und/oder Texturen in einem Bauteil erkannt werden können und welche nicht. Weil die Nachweisbarkeit von Fehlern insbesondere hinsichtlich Größe, Form und Lage durch das Verfahren angegeben werden kann, lässt sich bei der Konstruktion und Herstellung des Bauteils das Festigkeitspotential des Werkstoffs zuverlässig ausnutzen, wobei weder Fehler unerkannt bleiben noch das Bauteil überdimensioniert und damit der Werkstoff zu reichlich bemessen wird.

Es lassen sich realitätsnahe Testfälle schnell erzeugen, mit denen es möglich ist, ein vollständiges Spektrum an Testfällen vorzugeben. Die erzeugten Fehler werden so erzeugt, dass sie realen Fehlern hinsichtlich Form, Reflexionsverhalten und Rückstrahl- bzw. Rückstreu-Charakteristik nahe kommen.

Das Verfahren lässt sich auch dazu anwenden, das Auflösungsvermögen eines Ultraschall-Prüfsystems zu prüfen oder zu ermitteln (Anspruch 7). Durch Anwendung des erfindungsgemäßen Verfahrens wird getestet, ob das zum Aufnehmen des Bildes verwendete Ultraschall-Prüfsystem den gezielt erzeugten Fehler erkennt oder nicht. Es sind Aussagen über die Prüfungsempfindlichkeit in Abhängigkeit von Ausdehnung, Form und Lage der Fehler möglich. Damit ermöglicht das Verfahren, eine bestimmte Ultraschall-Prüftechnik zu erproben und abzusichern. Beispielsweise lässt sich die Anwendbarkeit einer neuartigen Ultraschall-Prüftechnik untersuchen. Mit dem Verfahren lässt sich ein Nachweis für das Auflösungsvermögen eines Prüfsystems (Gerät, Kabel, Wandler) oder Prüfverfahrens, das in der Produktion hochbelasteter Bauteile verwendet wird, erbringen. Ein solcher Nachweis ist z. B. für das Zertifizieren von rotierenden Schaufeln oder Scheiben für Flugzeug-Triebwerke erforderlich und kann mit dem Verfahren erbracht werden.

Der Werkstoff, aus dem der Probekörper hergestellt wird, ist nicht notwendigerweise derselbe Werkstoff, der für die Herstellung des Bauteils vorgesehen ist oder verwendet wird, Das Verfahren ermöglicht es, für die Herstellung des Probekörpers einen Werkstoff so auszusuchen, dass sich in ihm die Mikrorisse besonders einfach oder kostengünstig erzeugen lassen. Der Probekörper-Werkstoff braucht nicht denselben Belastungen standhalten wie der für das Bauteil vorgesehene. Letzterer ist beispielsweise hoch belastbarer Stahl, und die gezielte Erzeugung von Fehlern in diesem Stahl ist fertigungstechnisch aufwendig und teuer. Damit zeigt das Verfahren einen Weg auf, Kosten einzusparen. Für den Probekörper lässt sich ein Werkstoff verwenden, der preisgünstiger oder für das gezielte herstellen von Fehlern besser geeignet ist als für das Bauteil vorgesehene.

Vorzugsweise werden die Mikrorisse mittels Laser-Innengravur erzeugt (Anspruch 2). Die Erzeugung von Mikrorissen mittels Laser-Innengravur ist aus DE 3425263 A1, DE 04407547 C2, DE 10015702 A1 und DE 19925801 A1 bekannt. Die Mikrorisse lassen sich mittels Laser-Innengravur besonders schnell und leicht erzeugen. Durch gezielte Vorgabe von Parametern des Verfahrens zur Laser-Innengravur lassen sich die Mikrorisse genau in vorgegebenen Größen in einem Mikrorissfeld vorgegebener Form, Größe und Orientierung erzeugen.

Gemäß Anspruch 5 weisen der Werkstoff, der für das Bauteil vorgesehen ist, und der Werkstoff, aus dem der Probekörper hergestellt wird, annähernd die gleichen elastischen Kennwerte auf. Dadurch wird eine besonders hohe Realitätsnähe des Verfahrens erreicht. Wird das Verfahren dafür verwendet, das Auflösungsvermögen eines Ultraschall-Prüfsystems zu ermitteln, so führt Anspruch 5 dazu, dass das Auflösungsvermögen des Ultraschall-Prüfsystems im Prüfkörper-Werkstoff dem im Bauteil-Werkstoff besonders nahe kommt.

Im folgenden wird die Erfindung anhand eines Ausführungsbeispiels beschrieben. In diesem Ausführungsbeispiel fungiert als Bauteil eine Scheibe, die in einer Turbinenstufe eines Strahltriebwerks schnell rotiert und auf der Laufschaufeln angebracht sind. Diese Scheibe wird aus einer hoch belastbaren Nickelbasislegierung gefertigt. Einen Probekörper aus diesem Werkstoff herzustellen und in diesen Probekörper gezielt Fehler zu erzeugen wäre teuer und zeitaufwendig und zudem nicht in allen gewünschten Positionen und Ausrichtungen möglich. Der Probekörper hingegen kann aus einem dem Bauteilwerkstoff in seinen akustischen Eigenschaften ähnlichen und für Licht transparenten Werkstoff in nahezu beliebiger Form und Testfehlern in nahezu beliebiger Größe, Form und Orientierung hergestellt werden.

Mit einem Ultraschall-Prüfsystem werden mehrere Ultraschall-Signale des Probekörpers aufgenommen. Das Auflösungsvermögen eines Ultraschall-Prüfsystems hängt vom Winkel zwischen der Ausbreitungsrichtung des Ultraschalls und der Richtung der größten Ausdehnung eines Fehlers im Probekörper und/oder vom Winkel zwischen der Ausbreitungsrichtung und der Oberfläche des Probekörpers ab. Daher werden mehrere Ultraschall-Signale des Probekörpers aus verschiedenen Richtungen erzeugt.

Das erfindungsgemäße Verfahren lässt sich dazu verwenden, das Auflösungsvermögen eines Ultraschall-Prüfsystems bezogen auf den für das Bauteil vorgesehenen Werkstoff zu ermitteln. Hierfür werden nacheinander mehrere Spezifikationen aus Mikrorissen erzeugt. Die Spezifikationen unterscheiden sich dergestalt voneinander, dass jedes Punktemuster einer Spezifikation eine geringere maximale Ausdehnung hat als die aller vorhergehenden Spezifikationen. Für jede Spezifikation wird ein Prüfkörper gemäß der Spezifikation hergestellt, und Ultraschall-Signale von diesem Prüfkörper mit dem Ultraschall-Prüfsystem erzeugt. Geprüft wird, ob das Gerät einen Fehler in dem Prüfkörper erkennt oder nicht. Das Verfahren wird abgebrochen, wenn das Prüfgerät in demjenigen Prüfkörper, der gemäß der zuletzt erzeugten Spezifikation hergestellt wurde, keinen Fehler erkennt. Vorzugsweise werden auch hierbei mehrere Signale aus verschiedenen Winkeln erzeugt. Die maximale Ausdehnung des kleinsten erkannten Fehlers wird als Maß für das Auflösungsvermögen des Prüfsystems verwendet.

Weiterhin lässt sich das Verfahren auch dazu verwenden, eine Bibliothek für mögliche Fehler in dem Bauteil zu erzeugen. Eine Menge von möglichen Fehlern wird vorgegeben, wobei jeder Fehler durch eine Spezifikation über ein Punktemuster vorgegeben wird. Für jeden möglichen Fehler wird mit Hilfe des erfindungsgemäßen Verfahrens
- einerseits ein Probekörper, in dem der Fehler gezielt erzielt,
- und andererseits Ultraschall-Signale dieses Probekörpers
erzeugt. Für jeden Fehler wird ein Abbild des Probekörpers und die Ultraschall-Signale des zugehörigen Probekörpers aufgenommen. Durch Auswertung der Signale wird ermittelt, ob der Fehler in mindestens einem der Ultraschall-Signale erkennbar ist. Vorzugsweise werden weiterhin zusätzlich die Anzahl, Form, Lage und Position der im Ultraschall-Signal erkannten Fehler mit der Spezifikation und/oder den gezielt im Probekörper erzeugten Fehlern verglichen.

Die Bibliothek erleichtert es, Ultraschall-Signale eines gefertigten Bauteils auszuwerten und Rückschlüsse von Ultraschall-Signalen des Bauteils auf das Vorhandensein und die Art, Lage und Abmessung von Fehlern im Bauteil zu ziehen.

## Patentansprüche

1. Verfahren zum Prüfen der Erkennbarkeit mindestens eines Fehlers in einem Bauteil mittels Ultraschall oder zur Auswertung von Ultraschall-Signalen des Fehlers, das folgende Schritte umfasst:
- Erzeugen einer elektronischen Spezifikation des Fehlers, die ein zwei- oder dreidimensionales Punktemuster umfasst,
- Herstellen eines Probekörpers, wobei für jeden Punkt des Punktemusters ein Mikroriss im Probekörper an der Position dieses Punktes erzeugt wird,
- Aufnehmen und Auswerten der Ultraschall-Signale des Probekörpers, wobei die größte Ausdehnung der Mikrorisse kleiner gewählt wird, als die zum Aufnehmen der Ultraschall-Signale verwendete Wellenlänge.

2. Verfahren nach Anspruch 1, **dadurch gekennzeichnet, dass** die Mikrorisse mittels Laser-Innengravur hergestellt werden.

3. Verfahren nach Anspruch 1 oder 2, **dadurch gekennzeichnet, dass** der Werkstoff, aus dem der Probekörper hergestellt wird, transparent für sichtbares Licht ist.

4. Verfahren nach Anspruch 3, **dadurch gekennzeichnet, dass** als transparenter Werkstoff Kron-, Borosilikat- oder Quarzglas verwendet wird.

5. Verfahren nach einem der Ansprüche 1 bis 4, **dadurch gekennzeichnet, dass** der Werkstoff, aus dem der Probekörper hergestellt wird, annähernd die gleichen elastischen Kennwerte wie der Werkstoff für das Bauteil aufweist.

6. Verfahren nach einem der Ansprüche 1 bis 5, **dadurch gekennzeichnet, dass** mehrere Spezifikationen mit je einem Punktemuster erzeugt werden, wobei die Punktemuster sich hinsichtlich Größe, Form und/oder Orientierung unterscheiden, und für jede Spezifikation
- das Herstellen eines Probekörpers gemäß dieser Spezifikation und
- das Aufnehmen und Auswerten von Ultraschall-Signalen dieses Probekörpers durchgeführt werden.

7. Verwendung des Verfahrens nach einem der Ansprüche 1 bis 6 zum Ermitteln oder Prüfen des Auflösungsvermögens eines Ultraschall-Prüfsystems, wobei das Aufnehmen der Ultraschall-Signale mit einem Prüfsystem durchgeführt wird.

8. Vorrichtung zum Prüfen der Erkennbarkeit mindestens eines Fehlers in einem Bauteil mittels Ultraschall oder zur Auswertung eines Ultraschall-Signals des Fehlers, die folgende Bestandteile umfasst:
- eine Einrichtung zum Erzeugen einer elektronischen Spezifikation des Fehlers, die ein zwei-oder dreidimensionales Punktemuster umfasst,
- eine Einrichtung zum Herstellen eines Probekörpers, die für jeden Punkt des Punktemusters ein Mikroriss an der Position dieses Punktes erzeugt,
- eine Einrichtung zum Aufnehmen und Auswerten von Ultraschall-Signalen des Probekörpers, wobei die Einrichtung zum Herstellen eines Probekörpers derart beschaffen ist, dass die größte Ausdehnung der Mikrorisse kleiner ist, als die zum Aufnehmen der Ultraschall-Signale verwendete Wellenlänge.

9. Vorrichtung nach Anspruch 8 , **dadurch gekennzeichnet, dass** die Einrichtung zum Herstellen eines Probekörpers einen Laserapparat zur Herstellung von Mikrorissen mittels Innengravur umfasst.

10. Verwendung der Vorrichtung nach Anspruch 8 oder 9 zum Ermitteln oder Prüfen des Auflösungsvermögens eines Ultraschall-Prüfsystems, wobei das Prüfsystem ein Bestandteil der Einrichtung zum Aufnehmen und Auswerten der Ultraschall-Signale ist.

## Claims

1. Method for testing the detectability of at least one fault in a component by means of ultrasound or for evaluating ultrasonic signals of the fault, comprising the following steps:
- generation of an electronic specification of the fault comprising a two- or three-dimensional dot pattern,
- production of a test specimen, wherein for each dot of the dot pattern a microcrack is generated in the test specimen at the position of this dot,
- recording and evaluating the ultrasonic signals of the test specimen, wherein the greatest extent of the microcracks is selected so as to be smaller than the wavelength used to record the ultrasonic signals.

2. Method according to claim 1, **characterised in that** the microcracks are produced by means of internal laser engraving.

3. Method according to claim 1 or 2, **characterised in that** the material from which the test specimen is produced is transparent to visible light.

4. Method according to claim 3, **characterised in that** crown glass, borosilicate glass or quartz glass is used as the transparent material.

5. Method according to one of claims 1 to 4, **characterised in that** the material from which the test specimen is produced has approximately the same elastic characteristic values as the material for the component.

6. Method according to one of claims 1 to 5, **characterised in that** a plurality of specifications with respective dot patterns are generated, wherein the dot patterns differ with regard to size, shape and/or orientation, and, for each specification,
- a test specimen is produced according to this specification and
- ultrasonic signals of this test specimen are recorded and evaluated.

7. Use of the method according to one of claims 1 to 6 for ascertaining or testing the resolution of an ultrasonic testing system, wherein the ultrasonic signals are recorded by a testing system.

8. An apparatus for testing the detectability of at least one fault in a component by means of ultrasound or for evaluating an ultrasonic signal of the fault, comprising the following constituent parts:
- a device for generating an electronic specification of the fault comprising a two- or three-dimensional dot pattern,
- a device for producing a test specimen which for each dot of the dot pattern generates a microcrack at the position of this dot,
- a device for recording and evaluating ultrasonic signals of the test specimen, wherein the device for producing a test specimen is constituted in such a way that the greatest extent of the microcracks is smaller than the wavelength used to record the ultrasonic signals.

9. An apparatus according to claim 8, **characterised in that** the device for producing a test specimen comprises a laser apparatus for producing microcracks by means of internal engraving.

10. Use of the apparatus according to claim 8 or 9 for ascertaining or testing the resolution of an ultrasonic testing system, wherein the testing system is a constituent part of the device for recording and evaluating the ultrasonic signals.

## Revendications

1. Procédé pour le contrôle de reconnaissabilité d'au moins un défaut dans un composant au moyen d'ultrasons, ou pour l'analyse de signaux ultrasonores du défaut, comprenant les étapes suivantes :
- génération d'une spécification électronique du défaut, comprenant un motif à points bi- ou tridimensionnel,
- fabrication d'un corps d'essai, une microfissure étant générée dans le corps d'essai pour chaque point du motif à point, à l'emplacement dudit point,
- enregistrement et analyse des signaux ultrasonores du corps d'essai, l'extension maximale des microfissures étant inférieure à la longueur d'onde appliquée pour l'enregistrement des signaux ultrasonores.

2. Procédé selon la revendication 1, **caractérisé en ce que** les microfissures sont réalisées par gravure intérieure au laser.

3. Procédé selon la revendication 1 ou la revendication 2, **caractérisé en ce que** le matériau dont est fait le corps d'essai est transparent à la lumière visible.

4. Procédé selon la revendication 3, **caractérisé en ce que** du verre crown, du verre borosilicaté ou du verre de silice sont utilisés comme matériau transparent.

5. Procédé selon l'une des revendications 1 à 4, **caractérisé en ce que** le matériau dont est fait le corps d'essai présente sensiblement les mêmes caractéristiques d'élasticité que le matériau du composant.

6. Procédé selon l'une des revendications 1 à 5, **caractérisé en ce que** plusieurs spécifications sont générées avec un motif à points pour chacune, les motifs à points se distinguant entre eux quant à leur grandeur, leur forme et/ou leur orientation, et **en ce que**, pour chaque spécification,
- la fabrication d'un corps d'essai conformément à cette spécification et
- l'enregistrement et l'analyse des signaux ultrasonores dudit corps d'essai sont effectués.

7. Utilisation du procédé selon l'une des revendications 1 à 6 pour la détermination ou le contrôle de la résolution d'un système de test par ultrasons, l'enregistrement des signaux ultrasonores étant effectué avec un système de test.

8. Système pour le contrôle de reconnaissabilité d'au moins un défaut dans un composant au moyen d'ultrasons, ou pour l'analyse d'un signal ultrasonore du défaut, comprenant les éléments suivants :
- un dispositif de génération d'une spécification électronique du défaut, comprenant un motif à points bi- ou tridimensionnel,
- un dispositif de fabrication d'un corps d'essai, générant une microfissure pour chaque point du motif à point, à l'emplacement dudit point,
- un dispositif d'enregistrement et d'analyse des signaux ultrasonores du corps d'essai, le dispositif de fabrication d'un corps d'essai étant réalisé de manière telle que l'extension maximale des microfissures est inférieure à la longueur d'onde appliquée pour l'enregistrement des signaux ultrasonores.

9. Système selon la revendication 8, **caractérisé en ce que** le dispositif de fabrication d'un corps d'essai comprend un appareil à laser pour la réalisation de microfissures par gravure intérieure.

10. Utilisation du système selon la revendication 8 ou la revendication 9 pour la détermination ou le contrôle de la résolution d'un système de test par ultrasons, ledit système de test étant un élément du dispositif pour l'enregistrement et l'analyse des signaux ultrasonores.
